# EUROPÄISCHE PATENTSCHRIFT

(11) **EP 4 259 340 B1**
(45) Veröffentlichungstag und Bekanntmachung des Hinweises auf die Patenterteilung: **18.03.2026**
(21) Anmeldenummer: 21810934.6
(22) Anmeldetag: 08.11.2021
(51) Int. Cl.: B05B 12/08, B05B 5/04, B25J 9/16, B25J 13/08, G01M 13/028, B05B 13/04, B25J 11/00, G01H 1/00, B05B 12/00

(54) **BESCHICHTUNGSEINRICHTUNG MIT EINEM SCHWINGUNGSSENSOR UND ZUGEHÖRIGES BETRIEBSVERFAHREN**
COATING SYSTEM WITH A VIBRATION SENSOR AND ASSOCIATED METHOD
DISPOSITIF DE REVÊTEMENT MUNI D'UN CAPTEUR DE VIBRATIONS ET PROCÉDÉ ASSOCIÉ

(30) Priorität: 10.12.2020 DE 102020132932
(43) Veröffentlichungstag der Anmeldung: 18.10.2023
(73) Patentinhaber: Dürr Systems AG, 74321 Bietigheim-Bissingen (DE)
(72) Erfinder: SEIZ, Bernhard, 74348 Lauffen (DE); KRUMMA, Harry, 74357 Bönnigheim (DE); NOLTE, Hans-Jürgen, 74354 Besigheim (DE); HECKELER, Christoph, 71272 Renningen (DE)
(74) Vertreter: v. Bezold & Partner Patentanwälte - PartG mbB
(86) Internationale Anmeldenummer: PCT/EP2021/080932
(87) Internationale Veröffentlichungsnummer: WO 2022/122274

(56) Entgegenhaltungen:
- WO-A1-2016/180521
- US-A1- 2019 314 842

## Beschreibung

### Technisches Gebiet der Erfindung

Die Erfindung betrifft eine Beschichtungseinrichtung (z.B. Lackierroboter) zur Beschichtung von Bauteilen (z.B. Kraftfahrzeugkarosseriebauteile) mit einem Beschichtungsmittel (z.B. Lack). Weiterhin betrifft die Erfindung ein entsprechendes Betriebsverfahren.

### Hintergrund der Erfindung

In modernen Lackieranlagen zur Lackierung von Kraftfahrzeugkarosseriebauteilen werden als Applikationsgerät üblicherweise Rotationszerstäuber eingesetzt, die einen Glockenteller mit hoher Geschwindigkeit drehen, wobei der zu applizierende Lack von dem rotierenden Glockenteller abgeschleudert und zerstäubt wird.

Im Betrieb kann jedoch an dem Rotationszerstäuber eine Unwucht auftreten, was zu einer Betriebsstörung führen kann. Eine derartige Unwucht kann beispielsweise entstehen, wenn es zu einer Kollision zwischen dem Glockenteller und einer Raumbegrenzung (z.B. Kabinenwand der Lackierkabine) kommt. Derartige Betriebsstörungen des Rotationszerstäubers sollten im Betrieb erkannt werden, damit die Betriebsstörung behoben werden kann, ohne dass der Betrieb der Lackieranlage stark beeinträchtigt wird.

Aus WO 2016/180521 A1 ist eine Lackieranlage bekannt, die derartige Betriebsstörungen von Rotationszerstäubern erkennt. Hierzu werden Schwingungssensoren eingesetzt, um die von dem Rotationszerstäuber ausgehenden mechanischen Schwingungen zu analysieren und dadurch eine Be-triebsstörung erkennen zu können.

Nachteilig an diesem bekannten Konzept ist jedoch die Tatsache, dass die Auswertung der Schwingungssignale von den verschiedenen Schwingungssensoren nur Rückschlüsse zulässt auf eine bestimmte Betriebsstörung des Rotationszerstäubers. Es ist dagegen bei diesem bekannten Konzept nicht möglich, Betriebsstörungen bei anderen störanfälligen Komponenten der Lackieranlage zu erkennen und zu lokalisieren. Darüber hinaus ist es bei diesem bekannten Konzept nicht möglich, verschiedene Typen von Betriebsstörungen zu unterscheiden.

Schließlich wird der technische Hintergrund der Erfindung auch in US 2019/0314842 A1 beschrieben.

Der Erfindung liegt deshalb die Aufgabe zugrunde, eine verbesserte Beschichtungseinrichtung und ein entsprechendes Betriebsverfahren zu schaffen.

### Beschreibung der Erfindung

Diese Aufgabe wird durch eine erfindungsgemäße Beschichtungseinrichtung bzw. ein entsprechendes Betriebsverfahren gemäß den unabhängigen Ansprüchen gelöst.

Die erfindungsgemäße Beschichtungseinrichtung dient vorzugsweise zur Lackierung von Kraftfahrzeugkarosseriebauteilen mit einem Lack. Die Erfindung ist jedoch hinsichtlich des Typs der zu beschichtenden Bauteile und des Typs des applizierten Beschichtungsmittels nicht auf dieses spezielle Anwendungsgebiet beschränkt. Beispielsweise kann die erfindungsgemäße Beschichtungseinrichtung auch andere Beschichtungsmittel applizieren, wie beispielsweise Dämmstoffe, Dichtmittel, oder Klebstoffe, um nur einige Beispiele zu nennen. Auch hinsichtlich des Typs der beschichteten Bauteile bestehen im Rahmen der Erfindung keine Beschränkungen. Anstelle von Kraftfahrzeugkarosseriebauteilen kann die erfindungsgemäße Beschichtungseinrichtung auch zur Beschichtung von anderen Bauteilen ausgelegt sein. Beispielhaft sind Flugzeugbauteile oder Bauteile von Windkraftanlagen zu nennen.

In einem bevorzugten Ausführungsbeispiel der Erfindung handelt es sich bei der Beschichtungseinrichtung jedoch um einen Lackierroboter, wie er an sich aus dem Stand der Technik bekannt ist, so dass auf eine detaillierte Beschreibung der konstruktiven Einzelheiten des Lackierroboters an dieser Stelle verzichtet werden kann.

Die erfindungsgemäße Beschichtungseinrichtung weist in Übereinstimmung mit der vorstehend erwähnten bekannten Lackieranlage mehrere störanfällige Komponenten auf, bei denen im Betrieb der Beschichtungseinrichtung Betriebsstörungen auftreten können. Vorstehend wurde lediglich erwähnt, dass Betriebsstörungen an einem Rotationszerstäuber auftreten können, wobei diese Betriebsstörungen durch eine Unwucht erzeugt werden. Der Begriff einer störanfälligen Komponente ist jedoch im Rahmen der Erfindung allgemein zu verstehen und nicht auf Rotationszerstäuber beschränkt. Vielmehr können im Rahmen der Erfindung auch Betriebsstörungen an anderen Komponenten auftreten, wie später noch detailliert erläutert wird.

Darüber hinaus weist auch die erfindungsgemäße Beschichtungseinrichtung in Übereinstimmung mit der eingangs beschriebenen bekannten Lackieranlage mindestens einen Schwingungssensor auf, um mechanische Schwingungen in der Beschichtungseinrichtung zu erfassen und ein steuerungstechnisch auswertbares Schwingungssignal zu erzeugen, das die mechanischen Schwingungen wiedergibt.

Weiterhin hat auch die erfindungsgemäße Beschichtungseinrichtung in Übereinstimmung mit der eingangs beschriebenen bekannten Lackieranlage eine Auswertungseinheit, die dazu dient, das von dem Schwingungssensor ausgehende Schwingungssignal auszuwerten und in Abhängigkeit davon eine Betriebsstörung einer der störanfälligen Komponenten der Beschichtungseinrichtung zu diagnostizieren.

Die Auswertungseinheit der erfindungsgemäßen Beschichtungseinrichtung diagnostiziert durch eine Auswertung des Schwingungssignals verschiedene Betriebsstörungen von verschiedenen störanfälligen Komponenten diagnostiziert.

Zum einen kann die Auswertungseinheit also durch eine Auswertung des Schwingungssignals verschiedene Typen von Betriebsstörungen voneinander unterscheiden.

Zum anderen kann die Auswertungseinheit auch Betriebsstörungen von verschiedenen störanfälligen Komponenten unterscheiden. Beispielsweise kann die Auswertungseinheit durch eine Auswertung des Schwingungssignals unterscheiden, ob eine Unwucht eines Glockentellers vorliegt oder ein Lagerschaden an dem Lackierroboter.

Konkret ermöglicht die Erfindung eine Diagnose und Unterscheidung folgender Betriebsstörungen:
- Getriebeschaden des mindestens einen Getriebes,
- Kollision des Beschichtungsroboters mit einem Hindernis, und
- Betriebsstörungen des Applikationsgeräts.

Es wurde vorstehend bereits kurz erwähnt, dass im Rahmen der Erfindung verschiedene störanfälligen Komponenten der Beschichtungseinrichtung auf Betriebsstörungen hin überwacht werden können, d.h. nicht nur Rotationszerstäuber, wie es an sich aus dem Stand der Technik bekannt ist.

Beispielsweise kann es sich bei einer störanfälligen Komponente, die auf Betriebsstörungen hin überwacht wird, um einen Beschichtungsroboter (z.B. Lackierroboter) handeln, der als solcher mehrere Roboterachsen aufweist. Typischerweise haben derartige Beschichtungsroboter eine serielle Roboterkinematik und mindestens sechs Roboterachsen, wie es an sich aus dem Stand der Technik bekannt ist. In dem bevorzugten Ausführungsbeispiel der Erfindung weist der Beschichtungsroboter eine Roboterbasis, ein schwenkbares Roboterglied, einen proximalen Roboterarm, einen distalen Roboterarm und/oder eine Roboterhandachse auf. An einem solchen Beschichtungsroboter können verschiedene Betriebsstörungen auftreten, wie beispielsweise Lagerschäden, Getriebeschäden oder Motorschäden.

Weiterhin kann es sich bei einer störanfälligen Komponente, die auf eine Betriebsstörung hin überwacht wird, um ein Applikationsgerät handeln, das zur Applikation des Beschichtungsmittels dient. Als Beispiel für eine solches Applikationsgerät wurde vorstehend bereits ein Rotationszerstäuber genannt. Im Rahmen der Erfindung können jedoch auch andere Typen von Applikationsgeräten auf eine Betriebsstörung hin überwacht werden, wie beispielsweise sogenannte Druckköpfe, die den zu applizierenden Lack im wesentlichen Overspray-frei applizieren.

Eine weitere störungsanfällige Komponente, die im Betrieb auf eine Betriebsstörung hin überwacht werden kann, ist eine Druckluftturbine, die beispielsweise in einem Rotationszerstäuber eingesetzt werden kann, um eine Turbinenwelle zu drehen, wie es an sich aus dem Stand der Technik bekannt ist. Bei derartigen Druckluftturbinen können als Betriebsstörungen beispielsweise Lagerschäden auftreten.

Es wurde bereits vorstehend kurz erwähnt, dass bei einem Rotationszerstäuber eine Kollision zwischen dem Glockenteller und einer Raumbegrenzung (z.B. Kabinenwand der Lackierkabine) zu einer Unwucht führen kann. Bei der störungsanfälligen Komponente, die im Betrieb auf eine Betriebsstörung hin überwacht wird, kann es sich also auch um einen Glockenteller handelt.

Weiterhin ist es im Rahmen der Erfindung möglich, Betriebsstörungen einer Dosierpumpe zu erkennen, die das Beschichtungsmittel zu dem Applikationsgerät dosiert.

Ferner wurde vorstehend bereits kurz erwähnt, dass herkömmliche Lackierroboter Motoren, Getriebe und Lager aufweisen, die ebenfalls Betriebsstörungen aufweisen können, die im Rahmen der Erfindung diagnostiziert werden können. Bei den störanfälligen Komponenten, die im Rahmen der Erfindung auf eine Betriebsstörung hin überwacht werden, kann es sich also auch um Motoren, Getriebe und/oder Lager des Beschichtungsroboters handeln.

Schließlich weisen Beschichtungseinrichtungen in der Regel steuerbare Druckventile auf, wie beispielsweise ein Beschichtungsmittelventil zur Steuerung des Beschichtungsmittelstroms oder ein Spülmittelventil zur Steuerung des Spülmittelstroms. Derartige Druckventile können im Betrieb ebenfalls Betriebsstörungen zeigen. Bei der störanfälligen Komponente, die im Betrieb auf eine Betriebsstörung hin überwacht wird, kann es sich also beispielsweise auch um ein steuerbares Druckventil handeln, beispielsweise in einem Rotationszerstäuber. Allgemein kann es sich bei der überwachten Komponente der Beschichtungseinrichtung auch um irgendein Ventil handeln, das beispielsweise elektrisch angesteuert wird.

Die vorstehende Beschreibung verschiedener störanfälliger Komponenten ist nicht abschließend. Vielmehr kann das erfindungsgemäße Konzept auch zur Erkennung von Betriebsstörungen an anderen Komponenten einer Beschichtungseinrichtung eingesetzt werden.

Es wurde vorstehend bereits erwähnt, dass sich das erfindungsgemäße Konzept bevorzugt zur Störungserkennung an einem Beschichtungsroboter (z.B. Lackierroboter) eignet, der ein Applikationsgerät (z.B. Rotationszerstäuber) führt. Hierbei ist es möglich, Betriebsstörungen des Applikationsgeräts durch eine Auswertung des Schwingungssignals des Schwingungssensors zu erkennen. Der Schwingungssensor kann hierbei an dem Beschichtungsroboter entfernt von dem Applikationsgerät montiert werden. Die von dem Applikationsgerät ausgehenden mechanischen Schwingungen werden hierbei über den Beschichtungsroboter zu dem Schwingungssensor übertragen, wobei der Beschichtungsroboter bestimmte Schwingungsübertragungseigenschaften aufweist. Die Auswertungseinheit kann das Schwingungssignal des Schwingungssensors dann unter Berücksichtigung der Schwingungsübertragungseigenschaften des Beschichtungsroboters auswerten. Beispielsweise kann der Schwingungssensor an der Roboterbasis, an einem drehbaren Roboterglied, an dem proximalen Roboterarm ("Arm 1"), an dem distalen Roboterarm ("Arm 2") oder an der Roboterhand-achse montiert werden, um nur einige Beispiele zu nennen.

Die räumliche Trennung zwischen dem zu überwachenden Applikationsgerät einerseits und dem Schwingungssensor andererseits ist insbesondere dann technisch vorteilhaft, wenn der Beschichtungsroboter eine elektrostatische Beschichtungsmittel Aufladung aufweist. Hierbei befindet sich das Applikationsgerät nämlich in einem Hochspannungsbereich, so dass die Anordnung des Schwingungssensors direkt an oder in dem Applikationsgerät problematisch wäre, weil der Schwingungssensor dann ebenfalls auf Hochspannungspotenzial liegen würde. Die räumliche Trennung zwischen dem zu überwachenden Applikationsgerät einerseits und dem Schwingungssensor andererseits bietet dagegen die Möglichkeit, dass der Schwingungssensor im elektrisch geerdeten Bereich angeordnet ist, so dass die Abfrage des Schwingungssensors wesentlich einfacher ist, da hierfür keine Potentialtrennung erforderlich ist.

Es wurde vorstehend bereits kurz erwähnt, dass das erfindungsgemäße Konzept die Möglichkeit bietet, verschiedene Betriebsstörungen der Beschichtungseinrichtung zu diagnostizieren und voneinander zu unterscheiden.

Eine mögliche Betriebsstörung ist - wie bereits vorstehend kurz erwähnt - eine Unwucht eines Glockentellers eines Rotationszerstäubers. Eine derartige Unwucht kann jedoch nicht nur an dem Glockenteller auftreten, sondern auch an anderen rotierenden Komponenten, die sich mit dem Glockenteller drehen, wie beispielsweise der Turbinenwelle des Rotationszerstäubers.

Eine weitere mögliche Betriebsstörung ist also eine Unwucht an einer mit dem Glockenteller rotierenden Komponente des Rotationszerstäubers.

Eine andere mögliche Betriebsstörung ist ein mechanischer Verschleiß eines Lagers (z.B. Wälzlager), beispielsweise eines Lagers des Rotationszerstäubers oder eines Lagers des Beschichtungsroboters. Bei dem Lager kann es sich um ein beliebiges Lager handeln, beispielsweise an einem Getriebe, einer Achse oder einem Motor, um nur einige Beispiele zu nennen.

Weitere mögliche Betriebsstörungen, die im Betrieb erkannt werden können, sind ein Ölverlust an einem Getriebe, fehlendes Getriebeöl oder ein Ölverlust oder fehlendes Motoröl an einem Motor des Beschichtungsroboters. Bei derartigen Betriebsstörungen kommt es zu erhöhter Reibung, die messbare Schwingungen verursacht.

Ferner können im Rahmen der Erfindung auch Montagefehler erkannt werden, wie beispielsweise ein falsches Anzugsmoment einer Befestigungsschraube oder eine fehlerhafte Montage einer Antriebswelle.

Darüber hinaus kann eine Betriebsstörung auch darin bestehen, dass eine Antriebswelle einer Dosierpumpe falsch montiert ist oder konstruktiv nicht geeignet ist.

Schließlich besteht im Rahmen der Erfindung auch die Möglichkeit, dass Kollisionen des Beschichtungsroboters mit einem Hindernis erkannt werden, beispielsweise mit einer Raumbegrenzung (z.B. Kabinenwand einer Lackierkabine) oder mit einem anderen Beschichtungsroboter.

Die vorstehende Beschreibung verschiedener möglicher Betriebsstörungen ist nicht abschließend. Vielmehr ermöglicht das erfindungsgemäße Konzept auch die Erkennung anderer Betriebsstörungen, die sich in einer Änderung des Schwingungsverhaltens niederschlagen.

Hinsichtlich des konstruktiven Aufbaus und der Funktionsweise des Schwingungssensors bestehen im Rahmen der Erfindung verschiedene Möglichkeiten. Beispielsweise kann es sich bei dem Schwingungssensor um einen zwei- oder dreiachsigen Beschleunigungssensor handeln. Alternativ besteht auch die Möglichkeit, dass der Beschleunigungssensor ein zwei- oder dreiachsiger Beschleunigungssensor ist, der auch ein zwei- oder dreiachsiges Gyroskop umfasst. Die Erfindung ist also hinsichtlich der Bauweise und der Funktionsweise des Schwingungssensors nicht auf bestimmte Typen von Schwingungssensoren beschränkt.

Es wurde bereits vorstehend kurz erwähnt, dass Lackiereinrichtungen üblicherweise eine elektrostatische Beschichtungsmittelaufladung aufweisen, so dass die Lackiereinrichtung einen Hochspannungsbereich und einen elektrisch geerdeten Bereich aufweist. Der Schwingungssensor ist dann vorzugsweise in dem elektrisch geerdeten Bereich angeordnet, was die Abfrage des Schwingungssensors vereinfacht, da keine Potenzialtrennung erforderlich ist.

Weiterhin ist zu erwähnen, dass Lackiereinrichtungen oftmals auch einen explosionsgeschützten Raum aufweisen, der beispielsweise eine Luftspülung aufweisen kann. Derartige explosionsgeschützte Räume sind beispielsweise in den technischen Normen IEC/EN 60079-11-Teil 11, IEC/EN 60079-25-Teil 25 und IEC/EN 60079-14-Teil 14 beschrieben. Der Schwingungssensor kann hierbei wahlweise in dem explosionsgeschützten Raum oder außerhalb des explosionsgeschützten Raums angeordnet sein.

Hinsichtlich der räumlichen Anordnung des Schwingungssensors in einem Beschichtungsroboter ist auch zu erwähnen, dass derartige Beschichtungsroboter für die einzelnen Roboterachsen jeweils einen Achsantrieb mit einem Gehäuse aufweisen. Der Schwingungssensor kann hierbei beispielsweise in dem Gehäuse des Achsantriebs für die vierte, fünfte oder sechste Roboterachse angeordnet werden.

Es wurde vorstehend bereits erwähnt, dass die Auswertungseinheit das Schwingungssignal auswertet, das von dem Schwingungssensor geliefert wird, um Betriebsstörungen der Beschichtungseinrichtung erkennen zu können. Hierbei besteht auch die Möglichkeit, dass zunächst ein Schwingungskennwert aus dem Schwingungssignal berechnet wird, wobei die Auswertungseinheit die Analyse dann anhand dieses Schwingungskennwerts vornimmt. Bei dem Schwingungskennwert kann es sich beispielsweise um den Effektivwert des Schwingungssignals, den Maximalwert des Schwingungssignals, die Amplitude erster Ordnung des Schwingungssignals, eine Amplitude höherer Ordnung des Schwingungssignals, den Klirrfaktor des Schwingungssignals oder den Crest-Faktor (Scheitelfaktor) des Schwingungssignals handeln, um nur einige Beispiele zu nennen.

In einer Variante der Erfindung wird der Schwingungskennwert direkt in dem Schwingungssensor von einer in den Schwingungssensor integrierten Sensorelektronik berechnet.

In einer anderen Variante der Erfindung wird der Schwingungskennwert dagegen erst in der Auswertungseinheit aus dem Schwingungssignal berechnet, wobei die Auswertungseinheit vorzugsweise baulich von dem Schwingungssensor getrennt ist. Es besteht jedoch alternativ auch die Möglichkeit, dass die Auswertungseinheit baulich in den Schwingungssensor integriert ist oder mit dem Schwingungssensor eine bauliche Einheit bildet, indem die Auswertungseinheit direkt an dem Schwingungssensor angeordnet ist.

Bei einer räumlichen Trennung von Schwingungssensor und Auswertungseinheit besteht auch die Möglichkeit, dass die Auswertungseinheit aus mehreren räumlich getrennten Teilen besteht, wie beispielsweise einer Auswertungseinheit an dem Beschichtungsroboter und einer Robotersteuerungseinheit.

Allgemein kann auch ein Teil der Auswertung direkt an dem Schwingungssensor erfolgen, während ein anderer Teil der Auswertung in der räumlich getrennten Auswertungseinheit erfolgen. Beispielsweise kann direkt an dem Schwingungssensor eine Filterung und Überlagerung der Einzelsignale zu einem Gesamtsignal erfolgen, während in der baulich getrennten Auswerteeinrichtung das Berechnen des Schwingungskennwerts aus dem Gesamtsignal erfolgt.

Grundsätzlich kann auch der Vergleich des Schwingungskennwerts bzw. der Schwingungskennwerte mit einem oder mehreren Grenzwert(en) direkt am Sensor, in der räumlich getrennten Auswerteeinrichtung oder teilweise direkt am Sensor und teilweise in der räumlich getrennten Auswerteeinheit erfolgen.

Ferner besteht im Rahmen der Erfindung auch die Möglichkeit, dass der Schwingungskennwert von einer Software berechnet wird, die in einem Mikroprozessor abläuft, der an die Auswertungseinheit angeschlossen oder in die Auswertungseinheit integriert ist.

Bei der Auswertung des Schwingungskennwerte kann der Schwingungskennwert beispielsweise mit einem Grenzwert (z.B. Maximalwert) verglichen werden, wobei ein zweites Warnsignal erzeugt wird, wenn der Schwingungskennwert den Grenzwert übersteigt. Das zweite Warnsignal kann dann beispielsweise dem Bediener der Beschichtungseinrichtung optisch und/oder akustisch angezeigt werden. Es besteht jedoch alternativ auch die Möglichkeit, dass das zweite Warnsignal lediglich ein Fehler-Flag in einer Maschinensteuerung ist.

Erfindungsgemäß überwacht die Auswertungseinheit den Schwingungskennwert über die Betriebsdauer der Beschichtungseinrichtung hin. Die Auswertungseinheit vergleicht den Schwingungskennwert dann mit einem vorgegebenen bauteilspezifischen Alterungsverhalten und erzeugt ein erstes Warnsignal, wenn der Vergleich des Schwingungskennwerts mit dem vorgegebenen Alterungsverhalten anzeigt, dass verschleißbedingt eine Wartung oder ein Austausch einer störanfälligen Komponente erforderlich ist. Das erste Warnsignal kann also ein Wartungssignal sein, das dem Bediener anzeigt, dass eine Wartung fällig ist. Das erste Warnsignal kann jedoch auch ein Stoppsignal sein, das dem Bediener anzeigt, dass der Betrieb unterbrochen werden muss, wobei das Stoppsignal auch automatisch zu einem Abbruch des Betriebs führen kann.

Darüber hinaus ist zu erwähnen, dass im Rahmen der Auswertung des Schwingungssignals auch das Frequenzspektrum ermittelt werden kann (z.B. zur Auswertung der Amplituden 1. Ordnung und/oder höherer Ordnungen). Es können auch mehrere unterschiedliche Gesamtsignale herangezogen werden, um einen oder mehrere Schwingungskennwert(e) zu berechnen, z.B. Berechnen mehrerer Schwingungskennwerte aus jeweils unterschiedlichen Gesamtsignalen, Heranziehen von mehreren unterschiedlichen Gesamtsignalen zur Berechnung eines Schwingungskennwerts.

Weiterhin besteht im Rahmen der Auswertung die Möglichkeit, dass mehrere Schwingungskennwerte aus mehreren Einzelsignalen berechnet werden, beispielsweise aus allen Einzelsignalen oder nur aus ausgewählten Einzelsignalen.

Es wurde vorstehend bereits erwähnt, dass die Auswertungseinheit das Schwingungsverhalten der störanfälligen Komponenten überwacht. Diese Schwingungsüberwachung kann beispielsweise im normalen Betrieb der Beschichtungseinrichtung erfolgen. Es ist jedoch alternativ auch möglich, dass die Schwingungsanalyse in einem bestimmten Messprozess außerhalb des normalen Beschichtungsbetriebs erfolgt. Hierzu kann eine Steuereinheit vorgesehen sein, die die Beschichtungseinrichtung entsprechend einem vorgegebenen Messprozess ansteuert. Der Schwingungssensor erfasst dann während des Messprozesses die Schwingungen in der Beschichtungseinrichtung und die Auswertungseinheit wertet die erfassten Schwingungssignale aus, um Betriebsstörungen zu erkennen.

Beispielsweise kann die Steuereinheit den Beschichtungsroboter zur Schwingungsmessung während des Messprozesses in eine bestimmte Roboterstellung steuern, die eine aussagekräftige Schwingungsanalyse ermöglicht oder vereinfacht.

Weiterhin besteht im Rahmen der Erfindung die Möglichkeit, dass die Steuereinheit den Rotationszerstäuber zur Schwingungsmessung während des Messprozesses mit einer bestimmten Drehzahl ansteuert, die nicht im Bereich von Resonanzfrequenzen liegt.

Alternativ besteht jedoch auch die Möglichkeit, dass die Steuereinheit den Rotationszerstäuber zur Schwingungsmessung während des Messprozesses gezielt mit einer Drehzahl ansteuert, die mit einer Resonanzfrequenz übereinstimmt.

Darüber hinaus kann die Steuereinheit den Rotationszerstäuber zur Schwingungsmessung während des Messprozesses auch nacheinander mit ansteigenden Drehzahlen ansteuern, wobei jeweils bei den einzelnen Drehzahlen eine Schwingungsmessung erfolgt. Weiterhin besteht im Rahmen der Erfindung der Möglichkeit, dass die Steuereinheit den Rotationszerstäuber während des Messprozesses mit unterschiedlichen Drehzahlen ansteuert, die ein vorgegebenes Drehzahlband durchlaufen. Die Auswertungseinheit kann dann während des Messprozesses Ist-Werte der Eigenfrequenzen der störanfälligen Komponente innerhalb des Drehzahlbandes ermitteln und die ermittelten ist-Werte mit vorgegebenen Soll-Werten der Eigenfrequenzen vergleichen, um eine Betriebsstörung zu erkennen

Ferner ist zu erwähnen, dass im Rahmen der Erfindung ein einziger Schwingungssensor ausreichen kann, um verschiedene Betriebsstörungen an verschiedenen störanfälligen Komponenten der Beschichtungseinrichtung zu erkennen und voneinander zu unterscheiden. Es ist jedoch im Rahmen der Erfindung alternativ auch möglich, dass die Beschichtungseinrichtung mehrere Schwingungssensoren aufweist.

Grundsätzlich sind im Rahmen der Erfindung Auswertungen von Schwingungssignalen im Zeitbereich und/oder im Frequenzbereich denkbar. Für die Überwachung können neben der "Intensität" eines Schwingungsereignisses (z.B. in Form von Schwingungskennwerten wie Amplituden, Effektivwerten usw.), deren zeitliche Eigenschaften (z.B. zeitliche Dauer, transient oder periodisch) einerseits und/oder deren frequenzmäßige Eigenschaften andererseits (z.B. enthaltene Frequenzanteile, frequenzbezogene "Intensitäten") ins Kalkül gezogen werden.

Weiterhin ist zu erwähnen, dass die Beschichtungseinrichtung (z.B. Lackieranlage) verschiedene Vorgehensweise zur Identifikation von Fehlern oder Störungen ermöglicht, die nachfolgend kurz beschrieben werden.
- Vorgehensweise 1: Die Beschichtungseinrichtung (z.B. Lackieranlage) arbeitet im normalen Prozessmodus, d.h. es können viele oder alle Teile der Anlage gleichzeitig in Betrieb / aktiv sein. Im Schwingungssignal sind also grundsätzlich eine Vielzahl an Schwingungsinformationen von unterschiedlichen Quellen (z.B. Zerstäuber, Motoren, Getriebe, Ventile, Achsen, ...) enthalten. Der Schwingungssensor "lauscht" auf alle möglichen Störungen gleichzeitig und analysiert/erkennt Fehler durch eine "intelligente" Auswertung, quasi durch "Isolieren" einzelner Fehler aus der Vielzahl an Schwingungsinformationen anhand von geeigneter Auswertung.
- Vorgehensweise 2: Die Beschichtungseinrichtung (z.B. Lackieranlage) wird gezielt in bestimmten Messprozeduren betrieben, wobei nur einzelne Teile der Anlage aktiv sind (z.B. bestimmte Turbinendrehzahl bei stehendem Roboter, definiertes Verfahren einer Achse bei nicht rotierender Turbine, Schalten bestimmter Ventile bei stehender Anlage oder dergleichen mehr). Im Schwingungssignal dominiert also diejenige Schwingungsinformation, die genau dieser gezielten Messprozedur zuzuordnen ist, d.h. die Auswertung erfolgt gezielt auf diese Schwingungsinformation hin.

Die vorstehend beschriebene "Vorgehensweise 2" kann als Folgeuntersuchung ausgeführt werden, wenn aus der vorstehend beschriebenen "Vorgehensweise 1" zunächst kein eindeutiges Ergebnis hinsichtlich Störung/Fehler gefunden wurde.

Die vorstehend beschriebene "Vorgehensweise 2" kann jedoch auch als einzige Vorgehensweise ausgeführt werden alternativ zu der vorstehend beschriebenen "Vorgehensweise 1".

Weiterhin ist im Rahmen der Erfindung eine redundante Überwachung möglich: Zur Bewertung von Störungen kann die Schwingungsauswertung mit Ergebnissen von anderen Auswertungen, z.B. von anderen Sensoren (Druck, Strom, Spannung, Drehzahl, Momente, Kraft, ...), kombiniert werden. In der Regel liefert die Beschichtungseinrichtung (z.B. Lackieranlage, Roboter) in der Praxis sehr viele Analysen, Sensorergebnisse, die im Rahmen der redundanten Überwachung alle mit ins Kalkül gezogen werden können. Auch mehrere Schwingungssensoren in diesem Zusammenhang an verschiedenen Orten sind denkbar.

Ferner kann im Rahmen der Auswertung auch Künstliche Intelligenz (KI) eingesetzt werden, um Bewertungen abzuleiten aus der Gesamtheit dieser vielen unterschiedlichen Signale.

Darüber hinaus ermöglicht die Erfindung einen Vergleich von mehreren Robotern untereinander innerhalb einer Roboterzelle, innerhalb einer Lackierlinie oder innerhalb einer Lackieranlage. Auf diese Weise können dann Roboter ermittelt werden, die besonders störanfällig sind ("Schwarze Schafe")

Ferner eignet sich die Erfindung auch für das sogenannte "Predictive Maintenance", wobei wartungsmaßnahmen in Abhängigkeit von der Auswertung der Schwingungssignale eingeleitet werden, d.h. unabhängig von festen Wartungsintervallen. Auch eine vermeintlich positive Veränderung des Schwingungsverhaltens (z.B. Verringerung eines Schwingungskennwerts im Vergleich zu einer vorhergehenden Messung) kann auf eine ungünstige Entwicklung hindeuten, z.B. im Sinn von Verschleiß-/Alterungsprozessen. Hier ist also die Veränderung an sich von Interesse, egal in welche Richtung. Diese wird dann z.B. von einer "Künstlichen Intelligenz" bewertet. Allgemein gesprochen können für eine Bewertung also sowohl die (absoluten) Schwingungskennwerte und die zugehörigen Grenzwerte (z.B. Schwingungsintensität aufgrund von Unwucht) als auch (relative) Veränderungen des Schwingungsverhaltens bzw. der Schwingungskennwerte (z.B. über die Zeit, im Vergleich zu vorhergehenden Messungen, ...) ins Kalkül gezogen werden.

Weiterhin ist zu erwähnen, dass die Erfindung nicht nur Schutz beansprucht für die vorstehend beschriebene Beschichtungseinrichtung. Vielmehr beansprucht die Erfindung auch Schutz für ein entsprechendes Betriebsverfahren. Die einzelnen Verfahrensschritte des erfindungsgemäßen Betriebsverfahrens gehen bereits aus der vorstehenden Beschreibung hervor, so dass auf eine separate Beschreibung der einzelnen Verfahrensschritte verzichtet werden kann.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.

### Kurzbeschreibung der Zeichnungen

Figur 1 zeigt eine schematische Darstellung eines erfindungsgemäßen Lackierroboters mit einem Rotationszerstäuber, wobei eine Schwingungsanalyse die Erkennung von Betriebsstörungen ermöglicht.
Figur 2 zeigt eine Perspektivansicht des Lackierroboters.
Figur 3 zeigt eine schematische Darstellung zur Berechnung eines Schwingungskennwert durch eine Sensorelektronik in dem Schwingungssensor.
Figur 4 zeigt eine schematische Darstellung zur Berechnung des Schwingungskennwerts durch einen Mikroprozessor in der Auswertungseinheit.
Figur 5 zeigt ein Schaubild zur Verdeutlichung des Schwingungsverhaltens bei einer Unwucht eines Rotationszerstäubers.
Figur 6 zeigt ein Schaubild zur Verdeutlichung des Schwingungsverhaltens eines Rotationszerstäubers nach einer Kollision.
Figur 7 zeigt ein Flussdiagramm zur Verdeutlichung des erfindungsgemäßen Betriebsverfahrens.
Figur 8 zeigt eine Abwandlung des Flussdiagramms gemäß Figur 7.
Figur 9 zeigt eine Abwandlung des Schaubildes gemäß Figur 6 zur Verdeutlichung eines Schwingungsereignisses bei einer Ventilschaltung eines Ventils.
Figur 10 zeigt ein Flussdiagramm zur Erläuterung einer Variante des erfindungsgemäßen Betriebsverfahrens.
Figur 11 zeigt ein Flussdiagramm einer weiteren Variante des erfindungsgemäßen Betriebsverfahren, bei der gezielt in einen Messprozess umgeschaltete werden kann, um die Diagnose der Betriebsstörungen zu erleichtern.

### Detaillierte Beschreibung der Zeichnungen

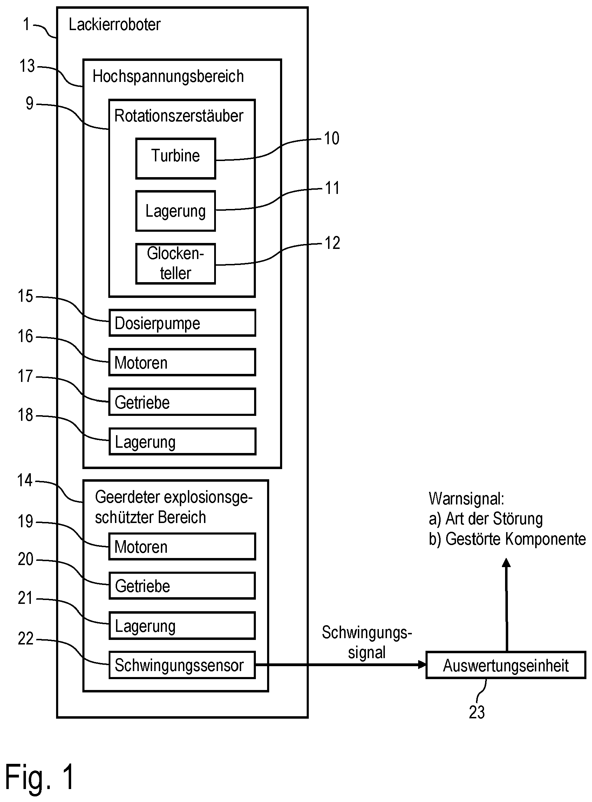

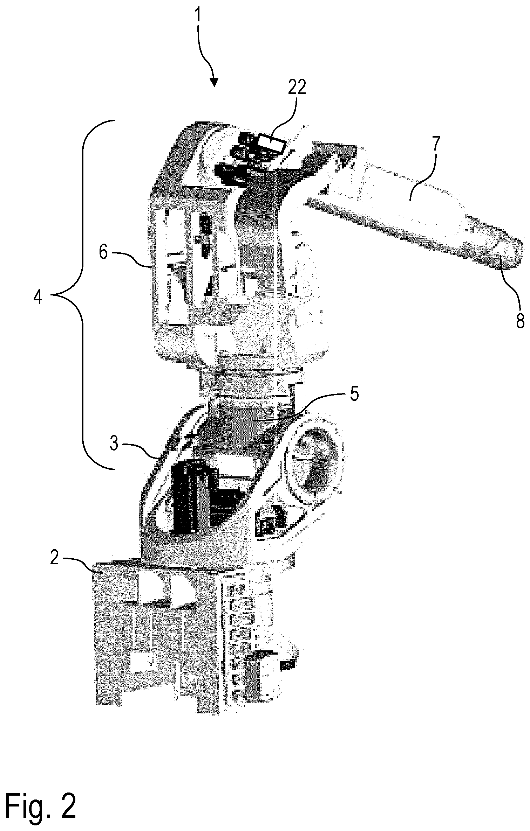

Die Figuren 1 und 2 zeigen verschiedene Darstellungen eines erfindungsgemäßen Lackierroboters 1, der weitgehend herkömmlich aufgebaut ist. So weist der Lackierroboter 1 zunächst eine ortsfeste Roboterbasis 2 auf, die ein drehbares Roboterglied 3 trägt, das in diesem Ausführungsbeispiel um eine senkrechte Drehachse drehbar ist. Hierbei ist zu erwähnen, dass der Lackierroboter 1 alternativ auch eine verfahrbare Roboterbasis haben kann, so dass der Lackierroboter 1 entlang einer Verfahrschiene verfahrbar ist. Das drehbare Roboterglied 3 trägt wiederum einen proximalen Roboterarm 4, der entsprechend der üblichen Fachterminologie auf dem Gebiet der Robotertechnik auch als "Arm 1" bezeichnet wird. Der proximale Roboterarm 4 ist hierbei in zwei Armteile 5, 6 unterteilt, die relativ zueinander drehbar sind. Der proximale Roboterarm 4 trägt wiederum einen distalen Roboterarm 7, wobei an dem Ende des distalen Roboterarms 7 eine mehrachsigen Roboterhandachse 8 montiert ist. Die Roboterhandachse 8 trägt wiederum als Applikationsgerät einen Rotationszerstäuber 9, wobei der Rotationszerstäuber 9 in Figur 2 zur Vereinfachung nicht dargestellt ist.

Der Rotationszerstäuber 9 kann weitgehend herkömmlich aufgebaut sein und enthält eine Druckluftturbine 10 mit einer Lagerung 11, wobei die Druckluftturbine 10 im Betrieb einen Glockenteller 12 dreht.

Der Lackierroboter 1 weist in herkömmlicher Weise eine elektrostatische Beschichtungsmittelaufladung auf und enthält somit einen Hochspannungsbereich 13 und einen geerdeten, explosionsgeschützten Bereich 14.

In dem Hochspannungsbereich 13 des Lackierroboters 1 befinden sich neben dem Rotationszerstäuber 9 auch eine Dosierpumpe 15 sowie Motoren 16, Getriebe 17 und Lagerungen 18 des Lackierroboters 1.

In dem elektrisch geerdeten Bereich 14 befinden sich ebenfalls Motoren 19, Getriebe 20 und Lagerungen 21 des Lackierroboters 1.

Weiterhin enthält der Lackierroboter 1 Ventile, beispielsweise in dem Rotationszerstäuber 9 und in der Dosierpumpe 15, wobei diese Ventile zur Vereinfachung nicht dargestellt sind. Auch Störungen dieser Ventile können im Rahmen der Erfindung erkannt werden.

Darüber hinaus befindet sich in dem elektrisch geerdeten Bereich 14 auch ein Schwingungssensor 22, der mechanische Schwingungen der vorstehend genannten Komponenten des Lackierroboters 1 erfasst und ein entsprechendes Schwingungssignal erzeugt, das an eine Auswertungseinheit 23 weitergeleitet wird. Die Auswertungseinheit 23 analysiert dann das Schwingungssignal, um Betriebsstörungen zu erkennen.

Zum einen kann die Auswertungseinheit 23 hierbei die gestörte Komponente identifizieren. Die Auswertungseinheit 23 kann also durch eine Analyse des Schwingungssignals unterscheiden, ob einer der Motoren 16 in dem Hochspannungsbereich 13 gestört ist oder einer der Motoren 19 in dem elektrisch geerdeten Bereich 14, um nur ein Beispiel zu nennen.

Zum anderen kann die Auswertungseinheit 23 durch die Schwingungsanalyse aber auch die Art der Betriebsstörung identifizieren. Die Auswertungseinheit 23 kann also verschiedene Typen von Betriebsstörungen voneinander unterscheiden.

In diesem Ausführungsbeispiel ist der Schwingungssensor 22 in dem distalen Roboterarm 7 angeordnet. Es besteht alternativ jedoch beispielsweise auch die Möglichkeit, dass der Schwingungssensor 22 in dem proximalen Roboterarm 4, in dem drehbaren Roboterglied 3 oder in der Roboterbasis 2 angeordnet ist. Mit zunehmendem Abstand zwischen dem Rotationszerstäuber 9 und dem Schwingungssensor 22 wird es jedoch zunehmend schwieriger, durch eine Auswertung des Schwingungssignals auf mögliche Betriebsstörungen des Rotationszerstäubers 9 zu schließen. Dies liegt an dem Schwingungsübertragungsverhalten innerhalb des Lackierroboters 1 und auch an der Dämpfung der mechanischen Schwingungen auf dem Weg von dem Rotationszerstäuber 9 zu dem Schwingungssensor 22. Der Schwingungssensor 22 sollte deshalb nicht zu weit entfernt von dem Rotationszerstäuber 9 angebracht werden, um die Signalauswertung nicht zu erschweren. Der Schwingungssensor 22 ist jedoch so zentral angeordnet, dass Schwingungsereignisse von verschieden verorteten Komponenten, wie Roboterarmen, -gliedern oder dem Rotationszerstäuber 9 zentral erfasst werden können. Dabei werden vorteilhafterweise die guten Übertragungseigenschaften der Roboterarme ausgenutzt.

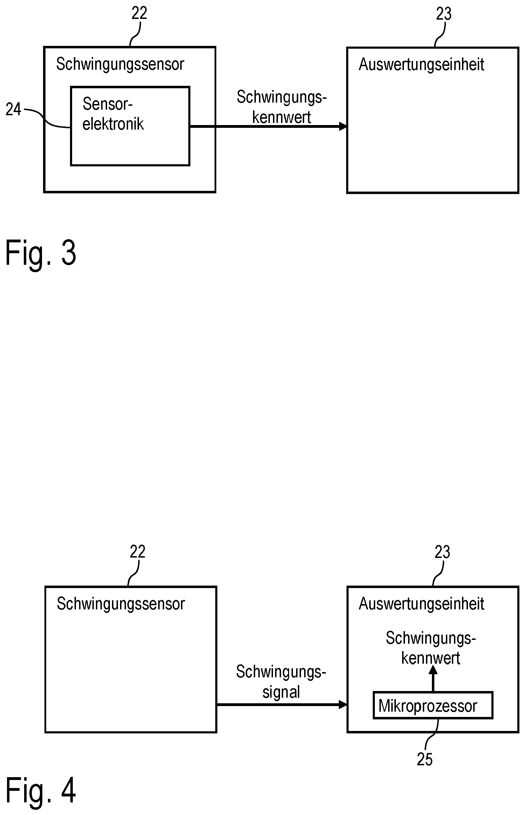

Figur 3 zeigt eine schematische Darstellung zur Verdeutlichung der Signalauswertung des Schwingungssensors 22. Hierbei ist in den Schwingungssensor 22 eine Sensorelektronik 24 integriert, die aus dem Schwingungssignal einen Schwingungskennwert berechnet, wie beispielsweise den Effektivwert, den Klirrfaktor oder den Crest-Faktor (Scheitelfaktor) des Schwingungssignals. Hierzu wird gegebenenfalls zunächst das zeitbezogene Schwingungssignal, beispielsweise mittels schneller Fourier-Transformation, in Frequenzanteile zerlegt und gegebenenfalls gefiltert. Dieser Schwingungskennwert wird dann zur Signalauswertung an die Auswertungseinheit 23 weitergeleitet.

Figur 4 zeigt eine Abwandlung von Figur 3, wobei der Schwingungskennwert von einem Mikroprozessor 25 berechnet wird, der in die Auswertungseinheit 23 integriert ist.

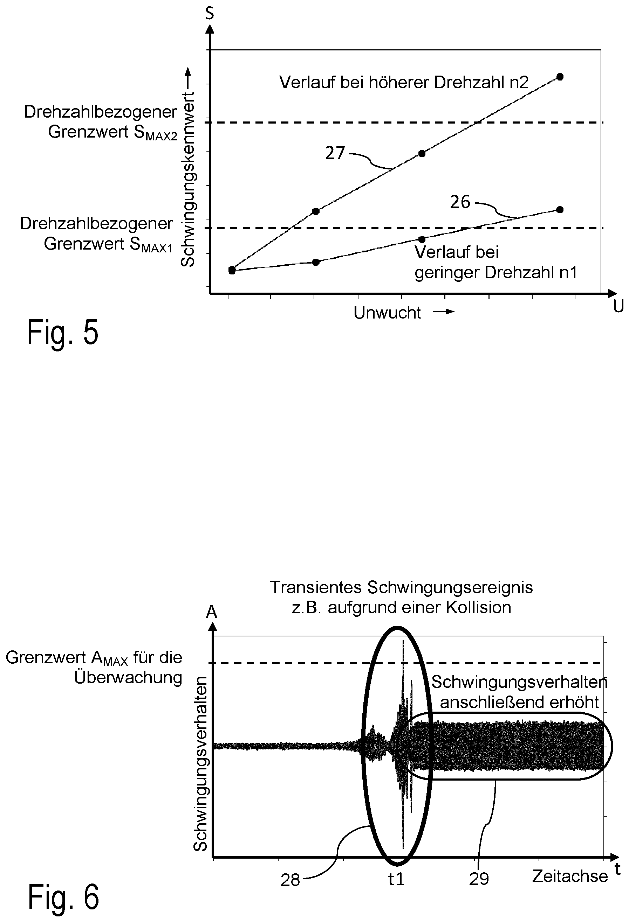

Figur 5 ist ein Diagramm zur Verdeutlichung der messbaren Intensität des Schwingungskennwerts aufgrund einer Unwucht U an einem Rotationszerstäuber, wobei die Unwucht U während der Betriebsdauer zunehmen kann, beispielsweise aufgrund von Kollisionen des Rotationszerstäubers 9 mit einer Raumbegrenzung (z.B. Kabinenwand der Lackierkabine) und auch aufgrund des normalen Bauteilverschleißes. Ganz allgemein könnte die Unwucht jedoch aus irgendeinem Grund auch abnehmen.

Eine erste Kennlinie 26 zeigt hierbei die Zunahme der Unwucht U bei einer relativ geringen Drehzahl n1 des Rotationszerstäubers 9. Bei dieser geringen Drehzahl n1 liegt eine Betriebsstörung vor, wenn der Schwingungskennwert S einen relativ kleinen Grenzwert S_{MAX1} überschreitet.

Eine zweite Kennlinie 27 zeigt dagegen die zunehmende Unwucht U bei einer relativ großen Dreh-zahl n2. Hierbei liegt eine Betriebsstörung vor, wenn der Schwingungskennwert S einen größeren Grenzwert S_{MAX2} überschreitet.

Die dargestellten unterschiedlichen Verläufe der Kennlinien 26, 27 müssen nicht unbedingt nur auf die höhere oder geringere Drehzahl zurückgehen. Ursache kann z.B. auch das frequenzabhängige Übertragungsverhalten des Roboterarms sein, oder auch andere Gründe.

Im Text und in Figur 5 ist beschrieben, dass die Drehzahl n1 relativ gering und die Drehzahl n2 relativ groß ist, und dass bei der geringen Drehzahl n1 ein relativ kleiner Grenzwert, bei der großen Drehzahl n2 ein größerer Grenzwert herangezogen wird. Dies ist jedoch nur als ein mögliches Beispiel zu verstehen. Allgemein gilt Folgendes: Auch wenn die höhere Drehzahl eine höhere Anregungskraft (aufgrund der Unwucht) ergibt, muss dies nicht unbedingt auch zu höheren Schwingungsintensitäten an der Messstelle führen. Beispielsweise dann nicht, wenn die Schwingungs-übertragung von der Anregungs- zur Messstelle für die höhere Drehzahl (höhere Frequenz) entsprechend "schlechter" ist als für die geringere Drehzahl (geringere Frequenz). Oder anders ausgedrückt: es können auch bei einer geringeren Drehzahl höhere Schwingungsintensitäten an der Messstelle auftreten als bei einer höheren Drehzahl (also gerade andersherum als dargestellt/beschrieben). Dann würde z.B. bei der geringeren Drehzahl ein größerer Grenzwert herangezogen als bei der höheren Drehzahl.

Die entscheidende allgemeine Aussage ist also, dass bei unterschiedlichen Drehzahlen n1 und n2 in der Regel unterschiedliche Schwingungsintensitäten (bzw. Verläufe) an der Messstelle zu erwarten sind. Dementsprechend muss der Grenzwert zur Drehzahl "passen".

Beispielsweise wären Messungen/Auswertungen bei zwei (deutlich) unterschiedlichen Drehzahlen auch eine Art redundante Überwachung.

Figur 6 zeigt ein Schwingungsdiagramm im Bereich einer Kollision des Lackierroboters mit einer Raumbegrenzung (z.B. Kabinenwand einer Lackierkabine). Zum Zeitpunkt t=t1 erfolgt hierbei die Kollision, die sich in zwei verschiedenen Schwingungsereignissen 28, 29 äußert.

Zum Zeitpunkt t=t1 der Kollision tritt zunächst das Schwingungsereignis 28 auf, das sich darin äu-βert, dass die Schwingungen einen vorgegebenen Grenzwert A_{MAX} überschreiten. Gemäß einem weiteren Ausführungsbeispiel kann sich das Schwingungsereignis jedoch auch darin äußern, dass die Schwingungen einen vorgegebenen Grenzwert unterschreiten.

Das andere Schwingungsereignis 29 tritt nach der eigentlichen Kollision auf und äußert sich darin, dass das Schwingungsverhalten anschließend verändert und im konkreten Ausführungsbeispiel erhöht ist.

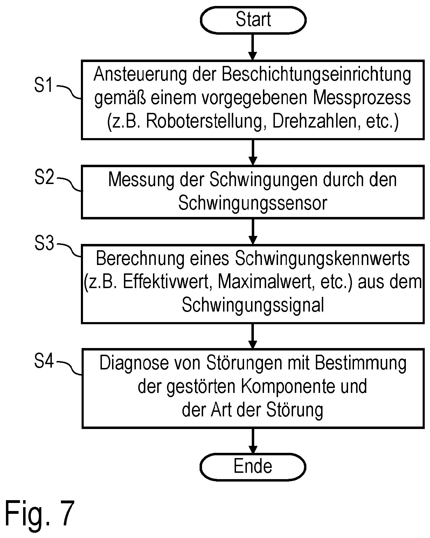

Figur 7 zeigt ein Flussdiagramm zur Verdeutlichung des erfindungsgemäßen Betriebsverfahrens.

In einem ersten Schritt S1 wird die Beschichtungseinrichtung gemäß einem vorgegebenen Mess-prozess angesteuert. Hierbei kann beispielsweise die Roboterstellung des Lackierroboters vorgegeben werden. Weiterhin besteht die Möglichkeit, dass der Messprozess bestimmte Drehzahlen des Rotationszerstäubers vorsieht. Alternativ besteht auch die Möglichkeit, dass im Rahmen des Mess-prozesses bestimmte Teile der Beschichtungseinrichtung in Betrieb sind, während andere Teile der Beschichtungseinrichtung außer Betrieb sind. Weiter kann der Messprozess auch vorsehen, dass bei nicht rotierendem Rotationszerstäuber nur eine bestimmte Roboterachse bewegt wird, um im Rahmen des Messprozesses beispielsweise Motor- und/oder Getriebeschäden ermitteln zu können.

Während des Messprozesses werden dann in einem Schritt S2 die Schwingungen durch den Schwingungssensor gemessen.

In einem Schritt S3 wird dann ein Schwingungskennwert aus dem Schwingungssignal berechnet.

In einem Schritt S4 erfolgt dann eine Diagnose von Betriebsstörungen mit einer Bestimmung der gestörten Komponente und auch mit einer Bestimmung der Art der Störung.

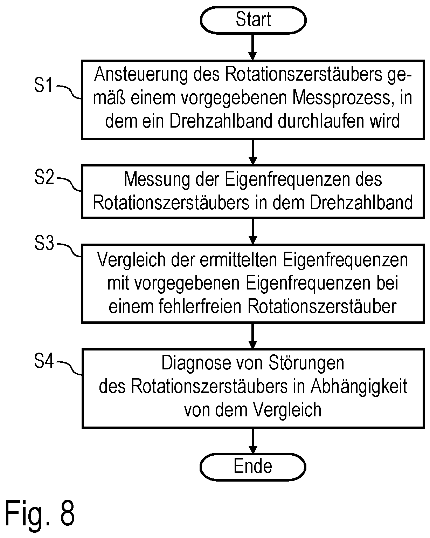

Figur 8 zeigt eine Abwandlung von Figur 7.

Auch hierbei wird in einem Schritt S1 ein vorgegebener Messprozess angesteuert, wobei der Rotationszerstäuber in dem Messprozess ein bestimmtes Drehzahl Band durchläuft.

In einem Schritt S2 werden dann die Eigenfrequenzen des Rotationszerstäubers in den Drehzahlband ermittelt.

In einem weiteren Schritt S3 werden die ermittelten Eigenfrequenzen dann mit vorgegebenen Eigenfrequenzen verglichen, die bei einem fehlerfreien Rotationszerstäuber auftreten würden.

In einem Schritt S7 erfolgt dann in Abhängigkeit von dem Vergleich eine Diagnose von möglichen Betriebsstörungen.

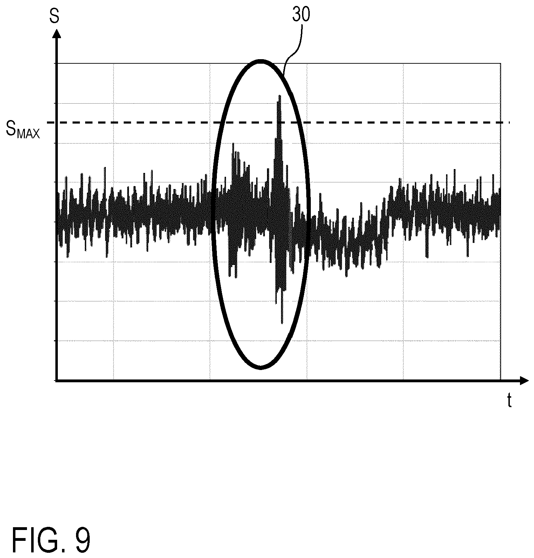

Figur 9 zeigt eine Abwandlung des Schaubildes gemäß Figur 6 zur Verdeutlichung eines Schwingungsereignisses bei einer Ventilschaltung eines Ventils. Bei dem Ventil kann es sich um ein beliebiges Ventil in einer Beschichtungsanlage handeln, wie beispielweise ein Lackventil, ein Lösemittelventil, ein Pulsluftventil oder ein Lenkluftventil, um nur einige Beispiele zu nennen.

Auf der X-Achse des Schaubildes ist die Zeit t aufgetragen, während auf der Y-Achse ein Schwingungskennwert S aufgetragen ist, der aus den aufgenommenen Schwingungssignalen berechnet wird.

Beispielsweise kann es sich bei dem Schwingungskennwert S um den Effektivwert des Schwingungssignals, den Maximalwert des Schwingungssignals, die Amplitude erster Ordnung des Schwingungssignals, eine Amplitude höherer Ordnung des Schwingungssignals, den Klirrfaktor des Schwingungssignals oder den Crest-Faktor (Scheitelfaktor) des Schwingungssignals handeln, um nur einige Beispiele zu nennen.

Weiterhin zeigt das Schaubild bei einem Schaltvorgang ein Schwingungsereignis 30, das dazu führt, dass der Schwingungskennwert S einen vorgegeben Maximalwert S_{MAX} überschreitet, was eine Stö-rung des Ventils anzeigt.

Abhängig von Referenzmessungen bei Schaltvorgängen eines intakten Ventils kann sich die Störung des Ventils gegebenenfalls aber auch durch das Ausbleiben des Schwingungsereignisses 30, beziehungsweise das ausbleibende Überschreiten des Maximalwertes S_{MAX} zeigen.

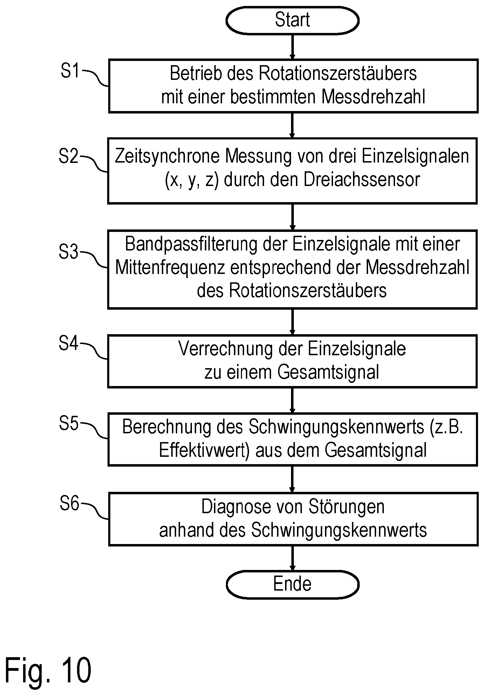

Im Folgenden wird nun das Flussdiagramm gemäß Figur 10 beschrieben, das eine Variante des erfindungsgemäßen Betriebsverfahrens zeigt.

In einem ersten Schritt S1 wird der Rotationszerstäuber so angesteuert, dass er mit einer bestimmten Messdrehzahl rotiert. Die Messdrehzahl kann dabei wahlweise außerhalb des Resonanzbereichs liegen oder mit der Resonanzfrequenz übereinstimmen. Der Rotationszerstäuber kann also wahlweise so angesteuert werden, dass Resonanzen vermieden werden oder dass Resonanzen gezielt angestrebt werden.

In einem zweiten Schritt S2 werden dann in den drei Raumrichtungen (X, Y, Z) drei Einzelsignale durch einen Dreiachssensor gemessen. Bei den Einzelsignalen handelte sich hierbei um Schwingungssignale in den drei Raumrichtungen (X, Y, Z).

Der nächste Schritt S3 sieht dann vor, dass die drei Einzelsignale bandpassgefiltert werden und zwar mit einer Mittenfrequenz, die der Messdrehzahl des Rotationszerstäubers entspricht.

Im nächsten Schritt S4 erfolgt dann eine Verrechnung der Einzelsignale zur Bildung eines Gesamtsignals. Beispielsweise kann hierbei der zeitliche Verlauf des Vektorbetrags ("Länge des Orbit-pfeils") aus den drei Einzelsignalen berechnet werden.

Im nächsten Schritt S5 wird dann aus dem Gesamtsignal ein Schwingungskennwert berechnet, wobei es sich beispielsweise um den Effektivwert handelt.

Im letzten Schritt S6 erfolgt dann eine Diagnose von Störungen anhand des Schwingungskennwerts, wie es bereits vorstehend beschrieben wurde.

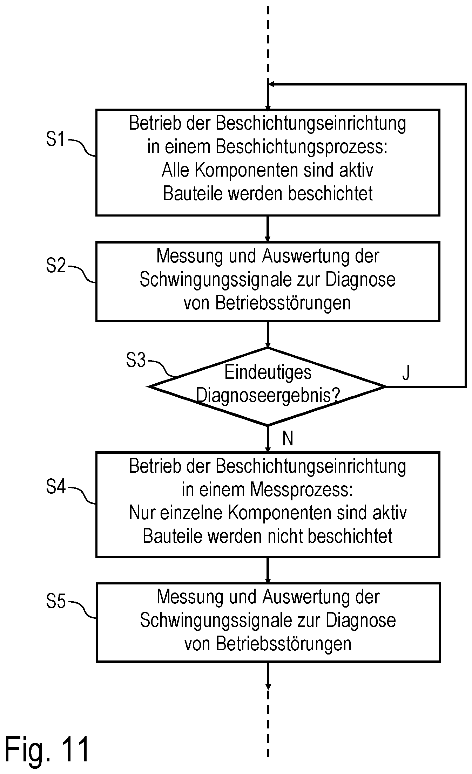

Im Folgenden wird nun das Flussdiagramm gemäß Figur 11 beschrieben, das eine Variante des erfindungsgemäßen Betriebsverfahrens verdeutlicht.

In einem ersten Schritt S1 wird die Beschichtungseinrichtung in einem normalen Beschichtungsprozess betrieben, d.h. alle Komponenten (z.B. Rotationszerstäuber, Dosierpumpe, Motoren, elektrostatische Beschichtungsmittelaufladung, etc.) sind aktiv und es werden Bauteile lackiert. Bei dem Beschichtungsprozess handelt sich also um die normale Betriebsweise der Beschichtungseinrichtung zur Lackierung von Bauteilen.

Während dieses normalen Beschichtungsprozesses erfolgt dann in einem weiteren Schritt S2 eine Messung und Auswertung der Schwingungssignale zur Diagnose von Betriebsstörungen, wie vorstehend bereits eingehend beschrieben wird.

In einem nächsten Schritt S3 wird dann geprüft, ob die Auswertung der Schwingungssignale zu einem eindeutigen Diagnoseergebnis führt. Das eindeutige Diagnoseergebnis kann beispielsweise darin bestehen, dass keine Betriebsstörung erkannt wird. Es besteht jedoch auch die Möglichkeit, dass zwar eine Betriebsstörung erkannt wird, aber klar zugeordnet werden kann, an welcher Komponente der Beschichtungseinrichtung die Betriebsstörung auftritt und welcher Art die Betriebsstörung ist. In diesem Fall kann der Betrieb der Beschichtungseinrichtung in dem normalen Beschichtungsprozess fortgesetzt werden oder es wird eine Fehlermeldung generiert.

Es kann jedoch im normalen Beschichtungsprozess der Fall auftreten, dass kein eindeutiges Diagnoseergebnis erkannt wird. Dies kann daran liegen, dass die Vielzahl von Komponenten der Beschichtungseinrichtung Schwingungen erzeugt, so dass angesichts der Vielzahl von verschiedenen Schwingungen von verschiedenen Komponenten die Betriebsstörung nicht isoliert und identifiziert werden kann. In einem solchen Fall wird in dem Schritt S4 aus dem Beschichtungsprozess in einen getrennten Messprozess umgeschaltet. In diesem Messprozess werden nicht sämtliche Komponenten der Beschichtungseinrichtung aktiv betrieben, sondern nur einzelne Komponenten oder sogar nur eine einzige Komponente.

In einem weiteren Schritt S5 werden dann wieder die Schwingungssignale gemessen und ausgewertet, um die Betriebsstörung zu identifizieren.

In dem Messprozess fällt die Identifizierung der Betriebsstörungen leichter, da nur wenige Komponenten aktiv sind und entsprechend wenige Schwingungssignale auftreten, so dass die Signalauswertung wesentlich einfacher ist.

Nach der Identifizierung der Betriebsstörungen kann dann wieder in den Beschichtungsprozess umgeschaltet werden, was hier zur Vereinfachung nicht dargestellt ist.

### Bezugszeichenliste:

- 1: Lackierroboter
- 2: Roboterbasis
- 3: Drehbares Roboterglied
- 4: Proximaler Roboterarm ("Arm 1")
- 5, 6: Armteile des proximalen Roboterarms
- 7: Distaler Roboterarm ("Arm")
- 8: Roboterhandachse
- 9: Rotationszerstäuber
- 10: Druckluftturbine zum Antrieb des Rotationszerstäubers
- 11: Lagerung in dem Rotationszerstäuber
- 12: Glockenteller des Rotationszerstäubers
- 13: Hochspannungsbereich des Lackierroboters
- 14: Geerdeter explosionsgeschützter Raum
- 15: Dosierpumpe zum Dosieren von Lack
- 16: Motoren zum Antrieb der Roboterachsen des Lackierroboters in dem Hochspanungsbereich
- 17: Getriebe der einzelnen Roboterachsen in dem Hochspanungsbereich
- 18: Lagerungen des Lackierroboters in dem Hochspanungsbereich
- 19: Motoren zum Antrieb der Roboterachsen des Lackierroboters in dem geerdeten Bereich
- 20: Getriebe der einzelnen Roboterachsen in dem geerdeten Bereich
- 21: Lagerungen des Lackierroboters in dem geerdeten Bereich
- 22: Schwingungssensor
- 23: Auswertungseinheit
- 24: Sensorelektronik in dem Schwingungssensor zur Berechnung eines Schwingungskennwerts
- 25: Mikroprozessor in der Auswertungseinheit zur Berechnung eines Schwingungskennwerts
- 26: Unwuchtkennlinie für niedrige Drehzahl
- 27: Unwuchtkennlinie für hohe Drehzahl
- 28: Schwingungsereignis bei einer Kollision
- 29: Schwingungsereignis nach einer Kollision
- 30: Schwingungsereignis bei einem Ventil

## Patentansprüche

1. Beschichtungseinrichtung (1) zur Beschichtung von Bauteilen mit einem Beschichtungsmittel, insbesondere Lackierroboter (1) zur Lackierung von Kraftfahrzeugkarosseriebauteilen mit einem Lack, mit
a) mehreren störanfälligen Komponenten (9-12, 15-18, 19-22), bei denen im Betrieb der Beschichtungseinrichtung (1) Betriebsstörungen auftreten können,
b) mindestens einem Schwingungssensor (22) zur Erfassung von mechanischen Schwingungen in der Beschichtungseinrichtung (1) und zur Umwandlung in ein steuerungstechnisch auswertbares Schwingungssignal entsprechend den erfassten mechanischen Schwingungen, und
c) einer Auswertungseinheit (23) zur Auswertung des Schwingungssignals des mindestens einen Schwingungssensors (22) und zur Diagnose einer Betriebsstörung einer der störanfälligen Komponenten (9-12, 15-18, 19-22) der Beschichtungseinrichtung (1) in Abhängigkeit von dem Schwingungssignal, wobei die Auswertungseinheit (23)
c1) mindestens einen Schwingungskennwert aus dem Schwingungssignal berechnet und auswertet,
c2) den Schwingungskennwert über die Betriebsdauer der Beschichtungseinrichtung (1) überwacht, und
c3) durch eine Auswertung des Schwingungssignals des Schwingungssensors (22) verschiedene Betriebsstörungen von verschiedenen störanfälligen Komponenten (9-12, 15-18, 19-22) der Beschichtungseinrichtung (1) diagnostiziert,
**dadurch gekennzeichnet,**
d) **dass** die Auswertungseinheit (23) den Schwingungskennwert mit einem vorgegebenen bauteilspezifischen Alterungsverhalten vergleicht, und
e) **dass** die Auswertungseinheit (23) ein erstes Warnsignal erzeugt, wenn der Vergleich des Schwingungskennwerts mit dem vorgegebenen Alterungsverhalten anzeigt, dass verschleißbedingt eine Wartung oder ein Austausch einer der störanfälligen Komponenten (9-12, 15-18, 19-22) erforderlich ist.

2. Beschichtungseinrichtung (1) nach Anspruch 1, **dadurch gekennzeichnet, dass** die störanfälligen Komponenten (9-12, 15-18, 19-22) der Beschichtungseinrichtung (1), die auf die Betriebsstö-rungen hin überwacht werden, mehrere der folgenden Komponenten (9-12, 15-18, 19-22) umfassen:
a) einen Beschichtungsroboter (1) mit mehreren Roboterachsen, insbesondere mit einer seriellen Roboterkinematik und/oder mindestens sechs Roboterachsen, insbesondere mit
a1) einer Roboterbasis (2), die optional ortsfest oder verfahrbar ist,
a2) einem schwenkbaren Roboterglied (3), das relativ zu der Roboterbasis (2) schwenkbar ist,
a3) einem proximalen Roboterarm (4), der relativ zu dem schwenkbaren Roboterglied (3) schwenkbar ist,
a4) einem distalen Roboterarm (7), der relativ zu dem proximalen Roboterarm (4) schwenkbar ist, und/oder
a5) einer Roboterhandachse (8), die an dem distalen Roboterarm (7) montiert ist,
b) ein Applikationsgerät (9) zur Applikation des Beschichtungsmittels, insbesondere als Rotationszerstäuber (9) mit einem drehbaren Glockenteller (12), wobei das Applikationsgerät (9) von dem Beschichtungsroboter (1) geführt wird,
c) eine Druckluftturbine (10) in dem Applikationsgerät (9), insbesondere zum Antrieb einer drehbaren Turbinenwelle des Rotationszerstäubers (9),
d) einen Glockenteller (12), der auf der Turbinenwelle des Rotationszerstäubers (9) montiert ist,
e) eine Dosierpumpe (15) zum Dosieren des Beschichtungsmittels zu dem Applikationsgerät (9),
f) mindestens einen Motor (16, 19), insbesondere einen Elektromotor, zum Antrieb einer der Roboterachsen des Beschichtungsroboters (1),
g) mindestens ein Getriebe (17, 20), das von einem der Motoren (16, 19) angetrieben werden und auf eine der Roboterachsen wirkt,
h) mindestens ein Lager (18, 21), insbesondere Luftlager oder Wälzlager, zur drehbaren Lagerung einer Komponente der Beschichtungseinrichtung (1),
i) ein elektrisch oder pneumatisch steuerbares Ventil, insbesondere
i1) ein Beschichtungsmittelventil zur Steuerung eines Beschichtungsmittelstroms,
i2) ein Spülmittelventil zur Steuerung eines Spülmittelstroms,
i3) ein Ventil zur Steuerung eines Luftstroms,
i4) ein Ventil zum Öffnen/Schließen einer Entsorgungsstrecke, durch die wechselweise oder gemischt Lack, Spül-/Lösemittel und/oder Druckluft strömt.

3. Beschichtungseinrichtung (1) nach Anspruch 2, **dadurch gekennzeichnet,**
a) **dass** der Schwingungssensor (22) an dem Beschichtungsroboter (1) entfernt von dem Applikationsgerät (9) montiert ist, insbesondere an der Roboterbasis, an dem schwenkbaren Roboterglied, an dem proximalen Roboterarm, an dem distalen Roboterarm oder an der Roboterhandachse,
b) **dass** die von dem Applikationsgerät (9) ausgehenden mechanischen Schwingungen über den Beschichtungsroboter (1) zu dem Schwingungssensor (22) übertragen werden, wobei der Beschichtungsroboter (1) bestimmte Schwingungsübertragungseigenschaften aufweist, und
c) **dass** die Auswertungseinheit (23) durch die Auswertung des Schwingungssignals und unter Berücksichtigung der Schwingungsübertragungseigenschaften des Beschichtungsroboters (1) Betriebsstörungen des Applikationsgeräts (9) ermittelt.

4. Beschichtungseinrichtung (1) nach einem der vorhergehenden Ansprüche, **dadurch gekennzeichnet, dass** die Auswertungseinheit (23) durch eine Auswertung des Schwingungssignals des Schwingungssensors (22) mehrere der folgenden Betriebsstörungen der Beschichtungseinrichtung (1) diagnostiziert und voneinander unterscheidet:
a) Unwucht eines Glockentellers (12) eines Rotationszerstäubers (9)
b) Unwucht einer mit dem Glockenteller (12) rotierenden Komponente, insbesondere der Turbinenwelle,
c) mechanischer Verschleiß eines Lagers (18, 21),
d) Ölverlust oder fehlendes Getriebeöl an einem Getriebe (17, 20),
e) Ölverlust oder fehlendes Motoröl an einem Motor (16, 19),
f) Montagefehler, insbesondere
f1) falsches Anzugsmoment einer Befestigungsschraube oder
f2) fehlerhafte Montage einer Antriebswelle,
g) fehlerhafte Antriebswelle einer Dosierpumpe (15),
h) Kollision des Beschichtungsroboters (1) mit einem Hindernis, insbesondere mit einer Raumbegrenzung oder mit einem anderen Beschichtungsroboter (1),
i) fehlerhafte Ventilschaltung und/oder fehlerhafte Funktion eines Ventils,
j) Getriebeschaden,
k) Motorschaden.

5. Beschichtungseinrichtung (1) nach einem der vorhergehenden Ansprüche, **dadurch gekennzeichnet, dass** der Schwingungssensor (22) ein zweiachsiger oder dreiachsiger Beschleunigungs-sensor ist.

6. Beschichtungseinrichtung (1) nach einem der vorhergehenden Ansprüche,
**dadurch gekennzeichnet,**
a) **dass** die Beschichtungseinrichtung (1) einen explosionsgeschützten Raum (14) aufweist, insbesondere mit einer Luftspülung, insbesondere gemäß den technischen Normen IEC/EN 60079-11-Teil elf, IEC/EN 60079-25-Teil 25 und IEC/EN 60079-14-Teil 14, und
b) **dass** der Schwingungssensor (22) in dem explosionsgeschützten Raum (14) angeordnet ist.

7. Beschichtungseinrichtung (1) nach einem der vorhergehenden Ansprüche,
**dadurch gekennzeichnet,**
a) **dass** die Beschichtungseinrichtung (1) einen Beschichtungsroboter (1) aufweist mit mindestens sechs Roboterachsen, die kinematisch seriell hintereinander angeordnet sind,
b) **dass** die einzelnen Roboterachsen jeweils einen Achsantrieb mit einem Gehäuse aufweisen,
c) **dass** der Schwingungssensor (22) in dem Gehäuse des Achsantriebs für die vierte, fünfte oder sechste Roboterachse angeordnet ist.

8. Beschichtungseinrichtung (1) nach einem der vorhergehenden Ansprüche,
**dadurch gekennzeichnet,**
a) **dass** die Beschichtungseinrichtung (1) eine elektrostatische Beschichtungsmittelaufladung aufweist und deshalb einen Hochspannungsbereich (13) und einen elektrisch geerdeten Bereich (14) aufweist, und
b) **dass** der Schwingungssensor (22) in dem elektrisch geerdeten Bereich (14) angeordnet ist.

9. Beschichtungseinrichtung (1) nach einem der vorhergehenden Ansprüche, **dadurch gekennzeichnet, dass** die Auswertungseinheit (23) mindestens einen der folgenden Schwingungskenn-werte aus dem Schwingungssignal berechnet und auswertet:
a) Effektivwert des Schwingungssignals,
b) Maximalwert des Schwingungssignals,
c) Amplitude 1. Ordnung des Schwingungssignals,
d) Amplitude höherer Ordnung des Schwingungssignals,
e) Klirrfaktor des Schwingungssignals,
f) Crest-Faktor des Schwingungssignals.

10. Beschichtungseinrichtung (1) nach Anspruch 9,
**dadurch gekennzeichnet,**
a) **dass** der mindestens eine Schwingungskennwert von einer in den Schwingungssensor (22) baulich integrierten Sensorelektronik (24) aus dem Schwingungssignal berechnet wird, oder
b) **dass** der mindestens eine Schwingungskennwert von der Auswertungseinheit (23) aus dem Schwingungssignal berechnet wird, wobei die Auswertungseinheit (23) baulich von dem Schwingungssensor (22) getrennt ist, oder
c) **dass** der mindestens eine Schwingungskennwert von einer Software berechnet wird, die in einem Mikroprozessor (25) abläuft, der an die Auswertungseinheit (23) angeschlossen ist.

11. Beschichtungseinrichtung (1) nach Anspruch 9 oder 10,
**dadurch gekennzeichnet,**
a) **dass** die Auswertungseinheit (23) den mindestens einen Schwingungskennwert (S) mit einem Grenzwert (S_{MAX1}, S_{MAX2}) vergleicht,
b) **dass** die Auswertungseinheit (23) ein zweites Warnsignal erzeugt, wenn der mindestens eine Schwingungskennwert (S) den Grenzwert (S_{MAX1}, S_{MAX2}) über- oder unterschreitet,
c) **dass** vorzugsweise das zweite Warnsignal dem Bediener der Beschichtungseinrichtung (1) optisch und/oder akustisch angezeigt wird.

12. Beschichtungseinrichtung (1) nach einem der Ansprüche 9 bis 11, **dadurch gekennzeichnet, dass** das erste und/oder das zweite Warnsignal
a) ein Wartungssignal ist, das dem Bediener anzeigt, dass eine Wartung fällig ist, oder
b) ein Stoppsignal ist, das dem Bediener anzeigt, dass der Betrieb unterbrochen werden muss oder automatisch zu einem Abbruch des Betriebs führt.

13. Beschichtungseinrichtung (1) nach einem der vorhergehenden Ansprüche,
**dadurch gekennzeichnet,**
a) **dass** eine Steuereinheit vorgesehen ist, die die Beschichtungseinrichtung (1) zur Schwingungsmessung entsprechend einem vorgegebenen Messprozess ansteuert,
b) **dass** der mindestens eine Schwingungssensor (22) während des Messprozesses die Schwingungen in der Beschichtungseinrichtung (1) misst, und
c) **dass** die Auswertungseinheit (23) die während des Messprozesses erfassten Schwingungssignale auswertet.

14. Beschichtungseinrichtung (1) nach Anspruch 13, **dadurch gekennzeichnet,**
a) **dass** die Steuereinheit den Beschichtungsroboter (1) zur Schwingungsmessung während des Messprozesses in eine bestimmte Roboterstellung steuert, und/oder
b) **dass** die Steuereinheit den Beschichtungsroboter (1) zur Schwingungsmessung während des Messprozesses gemäß eines vorgegebenen Bewegungsmusters steuert und/oder
c) **dass** die Steuereinheit den Rotationszerstäuber (9) zur Schwingungsmessung während des Messprozesses mit einer bestimmten Drehzahl ansteuert, die nicht im Bereich von Resonanzfrequenzen liegt, und/oder
d) **dass** die Steuereinheit den Rotationszerstäuber (9) zur Schwingungsmessung während des Messprozesses nacheinander mit ansteigenden Drehzahlen ansteuert, wobei jeweils bei den einzelnen Drehzahlen eine Schwingungsmessung erfolgt.

15. Beschichtungseinrichtung (1) nach Anspruch 13 oder 14, **dadurch gekennzeichnet,**
a) **dass** die Steuereinheit den Rotationszerstäuber (9) während des Messprozesses mit unterschiedlichen Drehzahlen ansteuert, die ein Drehzahlband durchlaufen,
b) **dass** die Auswertungseinheit (23) während des Messprozesses durch die Auswertung des Schwingungssignals Ist-Werte von Eigenfrequenzen der störanfälligen Komponente innerhalb des Drehzahlbandes ermittelt, und
c) **dass** die Auswertungseinheit (23) die Ist-Werte der Eigenfrequenzen mit vorgegebenen Soll-Werten der Eigenfrequenzen vergleich, um eine Betriebsstörung zu erkennen.

## Claims

1. Coating device (1) for coating components with a coating agent, in particular painting robot (1) for painting motor vehicle body components with a paint, comprising
a) a plurality of components (9-12, 15-18, 19-22) which are susceptible to malfunctions and in which operating malfunctions can occur during operation of the coating device (1),
b) at least one vibration sensor (22) for detecting mechanical vibrations in the coating device (1) and for converting them into a vibration signal which can be evaluated in terms of control technology in accordance with the detected mechanical vibrations, and
c) an evaluation unit (23) for evaluating the vibration signal from the at least one vibration sensor (22) and for diagnosing an operating malfunction in one of the components (9-12, 15-18, 19-22) of the coating device (1) which are subject to malfunctions as a function of the vibration signal, wherein the evaluation unit (23)
c1) calculates and evaluates at least one vibration characteristic value from the vibration signal,
c2) monitors the vibration characteristic value over the operating period of the coating device (1), and
c3) diagnoses various operating malfunctions of various components (9-12, 15-18, 19-22) of the coating device (1) that are susceptible to malfunctions by evaluating the vibration signal of the vibration sensor (22),
**characterized in**
d) **that** the evaluation unit (23) compares the vibration characteristic value with a predetermined component-specific aging behavior, and
e) **that** the evaluation unit (23) generates a first warning signal if the comparison of the vibration characteristic value with the predetermined aging behavior indicates that, due to wear, maintenance or replacement of one of the malfunction-prone components (9-12, 15-18, 19-22) is required.

2. Coating device (1) according to claim 1, **characterized in that** the malfunction-prone components (9-12, 15-18, 19-22) of the coating device (1) monitored for the operating malfunctions comprise several of the following components (9-12, 15-18, 19-22):
a) a coating robot (1) with several robot axes, in particular with serial robot kinematics and/or at least six robot axes, in particular with
a1) a robot base (2), which is optionally stationary or movable,
a2) a pivotable robot member (3) which is pivotable relative to the robot base (2),
a3) a proximal robot arm (4) which is pivotable relative to the pivotable robot member (3),
a4) a distal robot arm (7) pivotable relative to the proximal robot arm (4), and/or
a5) a robot hand axis (8) mounted on the distal robot arm (7),
b) an application device (9) for applying the coating agent, in particular as a rotary atomizer (9) with a rotatable bell cup (12), wherein the application device (9) is guided by the coating robot (1),
c) a compressed air turbine (10) in the application device (9), in particular for driving a rotatable turbine shaft of the rotary atomizer (9),
d) a bell cup (12) mounted on the turbine shaft of the rotary atomizer (9),
e) a metering pump (15) for metering the coating agent to the application device (9),
f) at least one motor (16, 19), in particular an electric motor, for driving one of the robot axes of the coating robot (1),
g) at least one gearbox (17, 20) driven by one of the motors (16, 19) and acting on one of the robot axes,
h) at least one bearing (18, 21), in particular air bearing or roller bearing, for rotatably supporting a component of the coating device (1),
i) an electrically or pneumatically controllable valve, in particular
i1) a coating agent valve for controlling a coating agent flow,
i2) a rinsing agent valve for controlling a flow of rinsing agent,
i3) a valve for controlling an air flow,
i4) a valve for opening/closing a disposal section through which alternately or mixed coating, rinsing/solvent and/or compressed air flows.

3. Coating device (1) according to claim 2, **characterized in,**
a) **that** the vibration sensor (22) is mounted on the coating robot (1) remote from the application device (9), in particular on the robot base, on the pivotable robot member, on the proximal robot arm, on the distal robot arm or on the robot hand axis,
b) **that** the mechanical vibrations emanating from the application device (9) are transmitted via the coating robot (1) to the vibration sensor (22), the coating robot (1) having certain vibration transmission properties, and
c) **that** the evaluation unit (23) determines operating malfunctions of the application device (9) by evaluating the vibration signal and taking into account the vibration transmission properties of the coating robot (1).

4. Coating device (1) according to one of the preceding claims, **characterized in that** the evaluation unit (23) diagnoses and distinguishes from each other several of the following operating malfunctions of the coating device (1) by an evaluation of the vibration signal of the vibration sensor (22):
a) unbalance of a bell cup (12) of a rotary atomizer (9)
b) unbalance of a component rotating with the bell cup (12), in particular the turbine shaft,
c) mechanical wear of a bearing (18, 21),
d) oil loss or missing gear oil at a gearbox (17, 20),
e) oil loss or missing motor oil on a motor (16, 19),
f) assembly errors, in particular
f1) incorrect tightening torque of a fastening screw or
f2) incorrect assembly of a drive shaft,
g) faulty drive shaft of a metering pump (15),
h) collision of the coating robot (1) with an obstacle, in particular with a room boundary or with another coating robot (1),
i) faulty valve circuit and/or faulty function of a valve,
j) gearbox damage,
k) motor damage.

5. Coating device (1) according to one of the preceding claims, **characterized in that** the vibration sensor (22) is a biaxial or triaxial acceleration sensor.

6. Coating device (1) according to one of the preceding claims, **characterized in,**
a) **that** the coating device (1) comprises an explosion-proof chamber (14), in particular with an air purging system, in particular in accordance with the technical standards IEC/EN 60079-11-Part eleven, IEC/EN 60079-25-Part 25 and IEC/EN 60079-14-Part 14, and
b) **that** the vibration sensor (22) is arranged in the explosion-proof chamber (14).

7. Coating device (1) according to one of the preceding claims, **characterized in**
a) **that** the coating device (1) comprises a coating robot (1) with at least six robot axes which are arranged kinematically in series one behind the other,
b) **that** the individual robot axes each have an axis drive with a housing,
c) **that** the vibration sensor (22) is arranged in the housing of the axis drive for the fourth, fifth or sixth robot axis.

8. Coating device (1) according to one of the preceding claims, **characterized in**
a) **that** the coating device (1) comprises an electrostatic coating agent charging system and therefore comprises a high-voltage area (13) and an electrically grounded area (14), and
b) **that** the vibration sensor (22) is arranged in the electrically grounded area (14).

9. Coating device (1) according to one of the preceding claims, **characterized in that** the evaluation unit (23) calculates and evaluates at least one of the following vibration characteristic values from the vibration signal:
a) RMS value of the vibration signal,
b) maximum value of the vibration signal,
c) 1st order amplitude of the vibration signal,
d) higher order amplitude of the vibration signal,
e) distortion factor of the vibration signal,
f) crest factor of the vibration signal.

10. Coating device (1) according to claim 9, **characterized in**
a) **that** the at least one vibration characteristic value is calculated from the vibration signal by sensor electronics (24) which are structurally integrated into the vibration sensor (22), or
b) **that** the at least one vibration characteristic value is calculated from the vibration signal by the evaluation unit (23), the evaluation unit (23) being structurally separate from the vibration sensor (22), or
c) **that** the at least one vibration characteristic value is calculated by software which runs in a microprocessor (25) which is connected to the evaluation unit (23).

11. Coating device (1) according to claim 9 or 10, **characterized in**
a) **that** the evaluation unit (23) compares the at least one vibration characteristic value (S) with a limit value (S_{MAX1}, S_{MAX2}),
b) **that** the evaluation unit (23) generates a second warning signal if the at least one vibration characteristic value (S) exceeds or falls below the limit value (S_{MAX1}, S_{MAX2}),
c) **that** preferably the second warning signal is indicated optically and/or acoustically to the operator of the coating device (1).

12. Coating device (1) according to one of the claims 9 to 11, **characterized in that** the first and/or the second warning signal
a) is a maintenance signal indicating to the operator that maintenance is due, or
b) is a stop signal which indicates to the operator that the operation must be interrupted or automatically leads to an interruption of the operation.

13. Coating device (1) according to one of the preceding claims, **characterized in**
a) **that** a control unit is provided which controls the coating device (1) for vibration measurement according to a predetermined measurement process,
b) **that** the at least one vibration sensor (22) measures the vibrations in the coating device (1) during the measuring process, and
c) **that** the evaluation unit (23) evaluates the vibration signals detected during the measuring process.

14. Coating device (1) according to claim 13, **characterized in,**
a) **that** the control unit controls the coating robot (1) into a specific robot position for vibration measurement during the measurement process, and/or
b) **that** the control unit controls the coating robot (1) for vibration measurement during the measuring process according to a predetermined movement pattern, and/or
c) **that** the control unit controls the rotary atomizer (9) for vibration measurement during the measuring process at a specific rotational speed which is not in the range of resonance frequencies, and/or
d) **that** the control unit controls the rotary atomizer (9) for vibration measurement during the measurement process successively at increasing rotational speeds, with vibration measurement taking place in each case at the individual rotational speeds.

15. Coating device (1) according to claim 13 or 14, **characterized in,**
a) **that** the control unit controls the rotary atomizer (9) during the measuring process at different speeds which run through a speed band,
b) **that** the evaluation unit (23) determines actual values of natural frequencies of the component susceptible to malfunction within the speed band during the measuring process by evaluating the vibration signal, and
c) **that** the evaluation unit (23) compares the actual values of the natural frequencies with predetermined desired values of the natural frequencies in order to detect an operating malfunction.

## Revendications

1. Dispositif de revêtement (1) pour revêtir des éléments de construction avec un agent de revêtement, en particulier robot de peinture (1) pour peindre des éléments de construction de carrosserie de véhicule automobile avec une peinture, comprenant
a) plusieurs composants (9-12, 15-18, 19-22) susceptibles de tomber en panne et pour lesquels des perturbations de fonctionnement peuvent survenir pendant le fonctionnement du dispositif de revêtement (1),
b) au moins un capteur de vibrations (22) pour la détection de vibrations mécaniques dans le dispositif de revêtement (1) et pour la conversion en un signal de vibration exploitable par la technique de commande en fonction des vibrations mécaniques détectées, et
c) une unité d'évaluation (23) pour l'évaluation du signal de vibration de l'au moins un capteur de vibrations (22) et pour le diagnostic d'une perturbation de fonctionnement de l'un des composants (9-12, 15-18, 19-22) sensibles aux perturbations du dispositif de revêtement (1), en fonction du signal de vibration, l'unité d'évaluation (23)
c1) calculant et évaluant au moins une valeur caractéristique de vibration à partir du signal de vibration,
c2) surveillant la valeur caractéristique de vibration pendant la durée de fonctionnement du dispositif de revêtement (1), et
c3) diagnostiquant différentes perturbations de fonctionnement de différents composants (9-12, 15-18, 19-22) du dispositif de revêtement (1) susceptibles de tomber en panne en évaluant le signal de vibration du capteur de vibrations (22),
**caractérisé en ce que**
d) l'unité d'évaluation (23) compare la valeur caractéristique de vibration à un comportement de vieillissement prédéfini spécifique à la pièce de construction, et
e) l'unité d'évaluation (23) génère un premier signal d'avertissement lorsque la comparaison de la valeur caractéristique de vibration avec le comportement de vieillissement prédéfini indique qu'un entretien ou un remplacement de l'un des composants (9-12, 15-18, 19-22) susceptibles de tomber en panne est nécessaire en raison de l'usure.

2. Dispositif de revêtement (1) selon la revendication 1, **caractérisé en ce que** les composants (9-12, 15-18, 19-22) du dispositif de revêtement (1) susceptibles d'être perturbés, dont les perturbations de fonctionnement sont surveillées, comprennent plusieurs des composants (9-12, 15-18, 19-22) suivants :
a) un robot de revêtement (1) avec plusieurs axes de robot, notamment avec une cinématique de robot en série et/ou au moins six axes de robot, notamment avec
a1) une base de robot (2) qui est, selon les options, fixe ou mobile,
a2) un élément de robot pivotant (3), qui peut pivoter par rapport à la base de robot (2),
a3) un bras de robot proximal (4) qui peut pivoter par rapport à l'élément de robot pivotant (3),
a4) un bras de robot distal (7) qui peut pivoter par rapport au bras de robot proximal (4), et/ou
a5) un axe de main de robot (8) monté sur le bras de robot distal (7),
b) un appareil d'application (9) pour l'application de l'agent de revêtement, en particulier sous la forme d'un pulvérisateur rotatif (9) avec un plateau à cloche rotatif (12), l'appareil d'application (9) étant guidé par le robot de revêtement (1),
c) une turbine à air comprimé (10) dans l'appareil d'application (9), en particulier pour entraîner un arbre de turbine rotatif du pulvérisateur rotatif (9),
d) un plateau à cloche (12) monté sur l'arbre de turbine du pulvérisateur rotatif (9),
e) une pompe de dosage (15) pour doser l'agent de revêtement acheminé vers l'appareil d'application (9),
f) au moins un moteur (16, 19), en particulier un moteur électrique, pour entraîner l'un des axes du robot de revêtement (1),
g) au moins un engrenage (17, 20) qui est entraîné par l'un des moteurs (16, 19) et qui agit sur l'un des axes du robot,
h) au moins un palier (18, 21), en particulier un palier à air ou un palier à roulement, pour positionner de manière rotative un composant du dispositif de revêtement (1),
i) une vanne à commande électrique ou pneumatique, notamment
i1) une vanne d'agent de revêtement pour commander un flux d'agent de revêtement,
i2) une vanne de produit de rinçage pour commander un flux de produit de rinçage,
i3) une vanne pour commander un flux d'air,
i4) une vanne pour ouvrir/fermer une section d'évacuation à travers laquelle s'écoule alternativement ou de manière mélangée de la peinture, du produit de rinçage/solvant et/ou de l'air comprimé.

3. Dispositif de revêtement (1) selon la revendication 2, **caractérisé**
a) **en ce que** le capteur de vibrations (22) est monté sur le robot de revêtement (1) à distance de l'appareil d'application (9), en particulier sur la base du robot, sur le membre pivotant du robot, sur le bras proximal du robot, sur le bras distal du robot ou sur l'axe de la main du robot,
b) **en ce que** les vibrations mécaniques émanant de l'appareil d'application (9) sont transmises au capteur de vibrations (22) par l'intermédiaire du robot de revêtement (1), le robot de revêtement (1) présentant certaines propriétés de transmission des vibrations, et
c) **en ce que** l'unité d'évaluation (23) détermine des perturbations de fonctionnement de l'appareil d'application (9) par l'évaluation du signal de vibration et en tenant compte des propriétés de transmission des vibrations du robot de revêtement (1).

4. Dispositif de revêtement (1) selon l'une des revendications précédentes, **caractérisé en ce que** l'unité d'évaluation (23) diagnostique et distingue plusieurs des perturbations de fonctionnement suivantes du dispositif de revêtement (1) en évaluant le signal de vibration du capteur de vibrations (22) :
a) déséquilibre d'un plateau à cloche (12) d'un pulvérisateur rotatif (9)
b) déséquilibre d'un composant rotatif avec le plateau à cloche (12), en particulier l'arbre de la turbine,
c) usure mécanique d'un palier (18, 21),
d) perte d'huile ou absence d'huile de transmission sur un engrenage (17, 20),
e) perte d'huile ou absence d'huile moteur sur un moteur (16,19),
f) erreurs de montage, notamment
f1) couple de serrage incorrect d'une vis de fixation ou
f2) montage incorrect d'un arbre d'entraînement,
g) arbre d'entraînement défectueux d'une pompe de dosage (15),
h) collision du robot de revêtement (1) avec un obstacle, en particulier avec une limite spatiale ou avec un autre robot de revêtement (1),
i) circuit de vanne défectueux et/ou fonctionnement défectueux d'une vanne,
j) panne de transmission,
k) panne de moteur.

5. Dispositif de revêtement (1) selon l'une des revendications précédentes, **caractérisé en ce que** le capteur de vibrations (22) est un capteur d'accélération bi-axial ou tri-axial.

6. Dispositif de revêtement (1) selon l'une quelconque des revendications précédentes, **caractérisé en ce que**
a) le dispositif de revêtement (1) présente un espace protégé contre les explosions (14), en particulier avec un balayage à l'air, en particulier selon les normes techniques CEI/EN 60079-11-partie 11f, CEI/EN 60079-25-partie 25 et CEI/EN 60079-14-partie 14, et
b) le capteur de vibrations (22) est agencé dans l'espace protégé contre les explosions (14).

7. Dispositif de revêtement (1) selon l'une quelconque des revendications précédentes, **caractérisé en ce que**
a) le dispositif de revêtement (1) présente un robot de revêtement (1) avec au moins six axes de robot qui sont agencés cinématiquement en série les uns derrière les autres,
b) les différents axes du robot présentent chacun un entraînement d'axe avec un boîtier,
c) le capteur de vibrations (22) est agencé dans le boîtier de l'entraînement d'axe pour le quatrième, le cinquième ou le sixième axe de robot.

8. Dispositif de revêtement (1) selon l'une quelconque des revendications précédentes, **caractérisé en ce que**
a) le dispositif de revêtement (1) présente une charge électrostatique d'agent de revêtement et présente par conséquent une zone à haute tension (13) et une zone électriquement mise à la terre (14), et
b) le capteur de vibrations (22) est agencé dans la zone électriquement mise à la terre (14).

9. Dispositif de revêtement (1) selon l'une des revendications précédentes, **caractérisé en ce que** l'unité d'évaluation (23) calcule et évalue au moins l'une des valeurs caractéristiques de vibration suivantes à partir du signal de vibration :
a) valeur efficace du signal de vibration,
b) valeur maximale du signal de vibration,
c) amplitude du premier ordre du signal de vibration,
d) amplitude d'ordre supérieur du signal de vibration,
e) distorsion harmonique du signal de vibration,
f) facteur de crête du signal de vibration.

10. Dispositif de revêtement (1) selon la revendication 9,
**caractérisé en ce que**
a) l'au moins une valeur caractéristique de vibration est calculée à partir du signal de vibration par une électronique de capteur (24) intégrée par construction dans le capteur de vibrations (22), ou
b) l'au moins une valeur caractéristique de vibration est calculée par l'unité d'évaluation (23) à partir du signal de vibration, l'unité d'évaluation (23) étant séparée par construction du capteur de vibrations (22), ou
c) l'au moins une valeur caractéristique de vibration est calculée par un logiciel qui s'exécute dans un microprocesseur (25) qui est raccordé à l'unité d'évaluation (23).

11. Dispositif de revêtement (1) selon la revendication 9 ou 10,
**caractérisé en ce que**
a) l'unité d'évaluation (23) compare l'au moins une valeur caractéristique de vibration (S) à une valeur limite (SMAX1, SMAX2),
b) l'unité d'évaluation (23) génère un deuxième signal d'avertissement lorsque l'au moins une valeur caractéristique de vibration (S) est supérieure ou inférieure à la valeur limite (SMAX1, SMAX2),
c) de préférence, le deuxième signal d'avertissement est indiqué à l'opérateur du dispositif de revêtement (1) de manière optique et/ou acoustique.

12. Dispositif de revêtement (1) selon l'une quelconque des revendications 9 à 11, **caractérisé en ce que** le premier et/ou le deuxième signal d'avertissement
a) est un signal d'entretien indiquant à l'opérateur qu'un entretien doit être effectué ; ou
b) est un signal d'arrêt qui indique à l'opérateur que le fonctionnement doit être interrompu ou qui entraîne automatiquement l'arrêt du fonctionnement.

13. Dispositif de revêtement (1) selon l'une quelconque des revendications précédentes,
**caractérisé en ce que**
a) il est prévu une unité de commande qui commande le dispositif de revêtement (1) pour la mesure des vibrations conformément à un processus de mesure prédéfini,
b) l'au moins un capteur de vibrations (22) mesure les vibrations dans le dispositif de revêtement (1) pendant le processus de mesure, et
c) l'unité d'évaluation (23) évalue les signaux de vibration saisis pendant le processus de mesure.

14. Dispositif de revêtement (1) selon la revendication 13, **caractérisé en ce que**
a) l'unité de commande commande le robot de revêtement (1) pour mesurer les vibrations pendant le processus de mesure dans une position déterminée du robot,
et/ou
b) l'unité de commande commande le robot de revêtement (1) pour la mesure des vibrations pendant le processus de mesure selon un modèle de mouvement prédéfini
et/ou
c) l'unité de commande commande le pulvérisateur rotatif (9) pour la mesure des vibrations pendant le processus de mesure avec une vitesse de rotation déterminée qui ne se situe pas dans la plage des fréquences de résonance, et/ou
d) l'unité de commande commande le pulvérisateur rotatif (9) pour la mesure des vibrations pendant le processus de mesure successivement avec des vitesses de rotation croissantes, une mesure des vibrations étant effectuée à chaque fois aux différentes vitesses de rotation.

15. Dispositif de revêtement (1) selon la revendication 13 ou 14, **caractérisé en ce que**
a) l'unité de commande commande le pulvérisateur rotatif (9) pendant le processus de mesure avec des vitesses de rotation différentes qui parcourent une bande de vitesses de rotation,
b) l'unité d'évaluation (23) détermine pendant le processus de mesure, par l'évaluation du signal de vibration, des valeurs réelles de fréquences propres du composant sensible aux perturbations à l'intérieur de la bande de vitesses, et
c) l'unité d'évaluation (23) compare les valeurs réelles des fréquences propres à des valeurs de consigne prédéfinies des fréquences propres afin de détecter une perturbation de fonctionnement.
